# FASCICULE DE BREVET EUROPEEN

(11) **EP 2 642 236 B1**
(45) Date de publication et mention de la délivrance du brevet: **25.11.2015**
(21) Numéro de dépôt: 13001176.0
(22) Date de dépôt: 08.03.2013
(51) Int. Cl.: F41A 3/66

(54) **Méthode de fabrication de carcasses pour carabines**
Herstellungsverfahren eines Waffengehäuses für Gewehre
Production method of a receiver for rifles

(30) Priorité: 22.03.2012 BE 201200200
(43) Date de publication de la demande: 25.09.2013
(73) Titulaire: Browning International Société anonyme, 4040 Herstal (BE)
(72) Inventeur: Dumortier, Thierry, 4680 Hermee (BE); Gielen, Charles-Aurele, 4560 Clavier (BE)
(74) Mandataire: Donné, Eddy

(56) Documents cités:
- WO-A2-2008/147491
- DE-B3-102010 009 488
- US-A1- 2004 226 211

## Description

L'invention concerne une méthode de fabrication de carcasses pour carabines.

Le rôle de la carcasse est de supporter et de maintenir en place l'ensemble des composants principaux comme le canon, la sous-garde, la crosse, le chargeur, les pièces mobiles etc. En plus de ce rôle, la carcasse a une influence prépondérante sur le design et l'esthétique de l'arme.

Les carcasses des armes à feu sont principalement fabriquées par usinage hors masse d'un bloc d'alliage bien défini, principalement de l'aluminium.

La carcasse d'une carabine classique est par exemple élaborée hors d'un bloc de 2kg d'aluminium pour donner une pièce finie ne pesant plus que 300g environ.

L'usinage de ces pièces se fait dans un atelier classique possédant un parc machine complet avec des fraiseuses multiaxes, des aléseuses, des rectifieuses, etcetera.

Un avantage de cette méthode de fabrication par usinage est que les caractéristiques mécaniques de l'alliage aluminium du bloc de départ sont préservées.

Un inconvénient par contre est le temps de fabrication et le coût de la main-d'oeuvre et du parc de machines et d'outillage, surtout qu'une carcasse est une pièce assez complexe et précise qui doit être fabriquée avec de faibles tolérances.

Cela nécessite bien sûr des hommes de métier qualifiés.

Un autre inconvénient est la perte de matière brute en grande quantité.

Une autre technique utilisée est le forgeage à chaud qui est une technique de fabrication utilisant des matrices qui vont former par déformation plastique des pièces chauffées en alliage non-ferreux. Les machines utilisées sont des presses hydrauliques.

Un avantage de cette méthode est l'homogénéité du matériau et le bel état de surface.

Un inconvénient réside dans la précision moyenne de la pièce forgée.

Encore une autre technique connue est celle du moulage par cire perdue, connue aussi sous le nom de FMP.

Ce procédé de moulage fait intervenir un modèle en cire enrobé de céramique réfractaire qui, après évacuation de la cire par chaleur, deviendra un moule de la pièce à réaliser.

L'alliage est coulé dans le moule en céramique pour ensuite être détruit par vibration de manière à récupérer la pièce finale.

Cette méthode est caractérisée par une grande précision des pièces sortant du moule et le très bel état de surface.

Cette méthode est cependant inadaptée pour fabriquer des pièces à géométrie complexe.

Le document DE 10 2010 009488 décrit une méthode de fabrication d'une carcasse, mais cette carcasse n'est pas une carcasse monobloc.

Le document WO 2008/147491 décrit une méthode de fabrication d'une carcasse dont les pièces de carcasses sont fabriquées en acier et sont munies de nervures de renforcement supplémentaires.

L'invention a pour but d'éviter les inconvénients susdits et de procurer une méthode rapide et efficace pour réaliser des carcasses pour carabines de grande qualité.

Ce but est atteint selon l'invention en offrant une méthode de fabrication qui comprend la réalisation de parties individuelles de la carcasse qui, dans un état assemblé peuvent former une carcasse ; suivi d'une réalisation de retouches mécaniques éventuelles ; suivi de l'assemblage de ces parties par soudage, dont la carcasse est assemblée en partant de deux parties, de préférence une demi-carcasse gauche et une demi-carcasse droite et dont les parties de carcasse sont dépourvues de nervures de renforcement.

La méthode de fabrication selon l'invention apporte une réduction théorique des coûts de fabrication de près de 50% par rapport au procédés classiques par usinage utilisés à l'heure actuelle.

De plus, la fabrication se faisant maintenant à partir de deux pièces, les retouches mécaniques éventuelles avant assemblage final se font plus facilement et plus rapidement, les machines pouvant travailler à plat et sur une plus grande surface tout en nécessitant moins d'outils et de machines complexes et moins d'expertise des opérateurs de machines pour faire des opérations d'usinage sur les surfaces intérieures de la carcasse finie, puisque ces surfaces sont maintenant plus facilement accessibles.

Les parties individuelles de la carcasse sont de préférence fabriquées par une méthode de fonderie semi-solide.

La technologie de fonderie semi-solide donne une protection contre les fluctuations du cours de l'aluminium transformé puisque cette technologie permet de partir d'aluminium classique de fonderie pour fabriquer les carcasses, ce qui rend la fabrication plus indépendante des prix des aluminiums d'usinage haut de gamme utilisés pour l'instant.

La technique de fonderie semi-solide offre des pièces presque finies de bonne facture avec une bonne résistance mécanique, compacité et état de finition et n'utilise que très peu de matière supplémentaire comparativement aux procédés de fonderie classiques et d'usinage, où les excédents matières ne sont pas réinjectés dans le processus de fabrication.

En résumé, la méthode selon l'invention permet de réduire de manière drastique les coûts de fabrication des carcasses.

Parmi les méthodes de fonderie semi-solide, la méthode connue sous le nom « Rheocasting » est préférée.

Il s'agit d'un procédé de fonderie utilisant la propriété thixotrope de la fonte semi-solide d'aluminium, qui stipule que la viscosité de la fonte diminue sous l'effet d'une agitation, principalement une contrainte de cisaillement .

Pour parvenir à l'état semi-solide, la fonte doit présenter les phases liquide et solide, cette dernière devant être caractérisée par une forme globulaire. Dans le cadre du rheocasting la phase solide globulaire est obtenue à partir d'un métal liquide refroidit de manière contrôlée à la température optimale d'état semi-solide par l'ajout d'un lopin de matière solide équivalent à un certain pourcentage de fraction solide. Ce mélange est ensuite rendu suffisamment liquide par agitation afin de permettre de l'injecter sous pression dans un moule.

Selon l'invention, les carcasses sont assemblées en partant de deux parties, de préférence une demi-carcasse ou flanc gauche et une demi-carcasse ou flanc droite.

Les parties de carcasse sont de préférence assemblées par soudage uniquement, c'est-à-dire sans éléments de connexion supplémentaires comme des tenons qui sont montés à travers des passages dans les parties de carcasse et qui peuvent constituer un affaiblissement locale de la carcasse, nécessitant une épaisseur plus large de la carcasse ou l'application de nervures de renforcement.

Les parties de carcasse selon l'invention sont dépourvues de ces nervures de renforcement et peuvent donc avoir un aspect principalement lisse à l'extérieure, c'est-à-dire à la surface prévue comme surface extérieure de la carcasse.

Les parties de carcasse sont de préférence assemblées par soudage par faisceau d'électrons, aussi connu en tant que « Electron Beam Welding ».

soudage par faisceau d'électrons, aussi connu en tant que « Electron Beam Welding ».

Le soudage par faisceau d'électrons permet de souder des composants grâce à l'énergie des électrons venus bombarder la surface des pièces à souder.

Les électrons sont extraits d'une cathode, puis accélérés par un potentiel électrique et focalisés par des bobines magnétiques. C'est leur énergie cinétique transformée en échauffement qui crée la soudure. Pour ce faire, le travail sous vide est requis de manière à gérer au mieux la projection des électrons.

Ce procédé d'assemblage autorise une grande pénétration de soudage, de faibles déformations et retraits de matière par son application très locale, ainsi que des vitesses de soudage élevées.

Bien que le soudage par faisceau d'électrons est la méthode d'assemblage sélectionnée, des essais ont montré que plusieurs procédés de soudure conviennent dans le cadre de l'invention, comme le soudage laser et le soudage par friction malaxage, soit le soudage par « Friction Stir Welding ».

L'invention concerne également un moule qui permet de réaliser une partie d'une carcasse monobloc pour carabine selon la méthode de l'invention.

Pour plus de clarté, un exemple de réalisation d'une carcasse de carabine selon l'invention est décrit ci-après à titre illustratif et non restrictif, référence étant faite aux dessins annexés dans lesquels:
La figure 1 est une vue latérale schématique d'une carabine pourvue d'une carcasse selon l'invention ;
la figure 2 représente à plus grande échelle les parties de la carcasse de la carabine de la figure 1 avant assemblage;

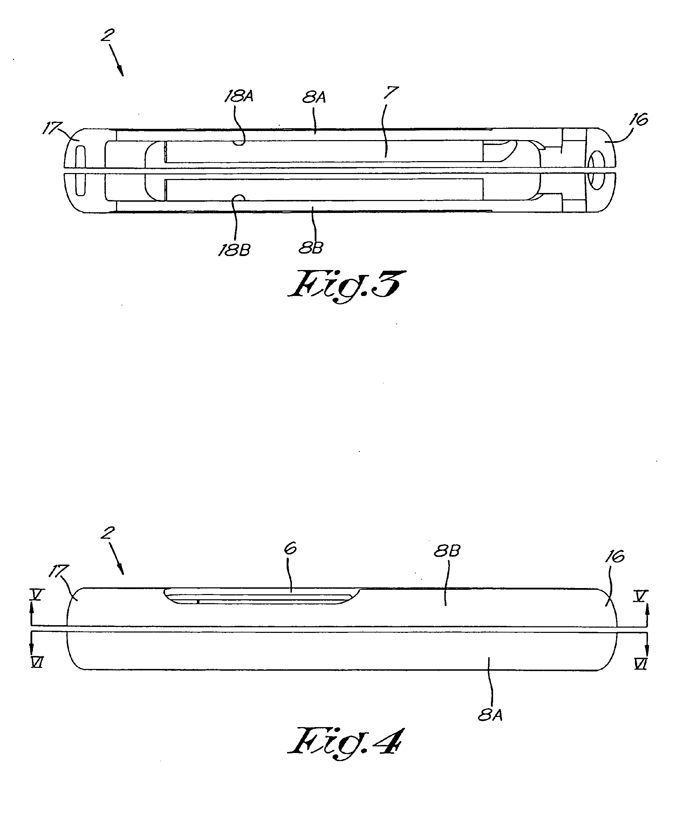

les figures 3 et 4 montrent respectivement une vue selon les flèches F3 et F4 de la figure 2;

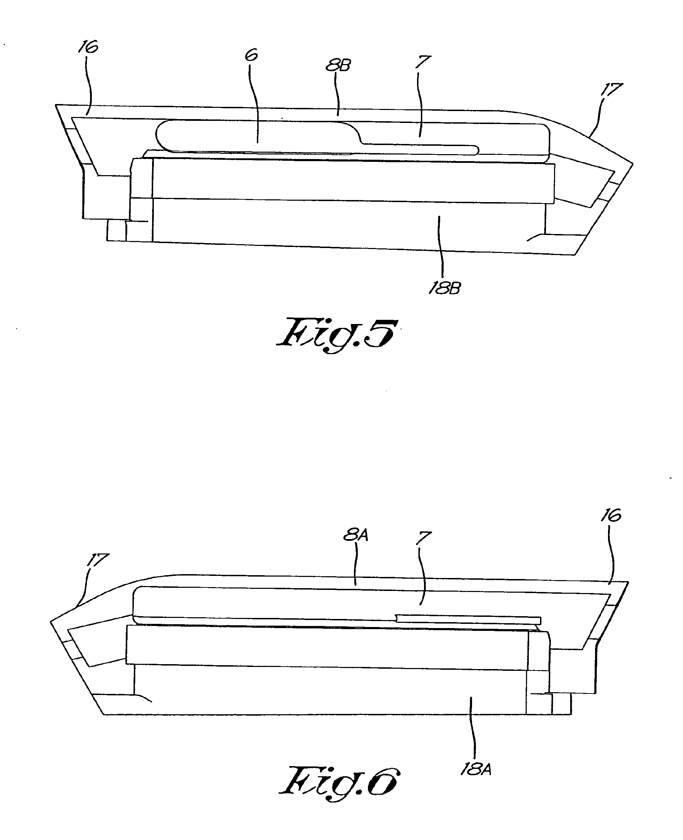

les figures 5 et 6 représentent des vues selon les lignes V-V et VI-VI de la figure 4;
les figures 7 à 11 sont une illustration très schématisée des différentes étapes de la méthode de fabrication selon l'invention.

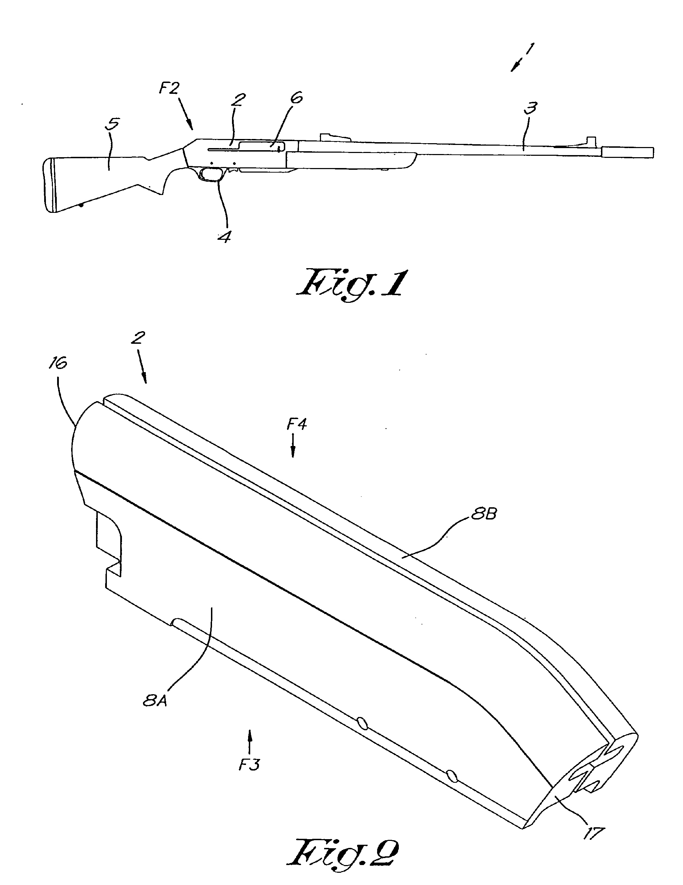

La carabine semi-automatique 1 représentée dans la figure 1 comprend une carcasse 2 qui supporte et maintient en place l'ensemble des composants principaux de la carabine 1 comme le canon 3, la sous-garde 4, la crosse 5 et les pièces mobiles 6 qui ne sont que partiellement dans la figure puisqu'elles sont logées principalement dans une cavité 7 de la carcasse 2.

Cette carcasse 2 doit être fabriquée avec une grande précision pour éviter un jeu non-souhaitable entre la carcasse 2 et les composants principaux et de permettre un guidage des pièces mobiles 6 sans jeu dans la carcasse 2.

Selon une réalisation de l'invention, la carcasse 2 est fabriquée à partir de plusieurs parties 8, qui, dans l'exemple de la figure 2, sont au nombre de deux, c'est-à-dire un flanc gauche 8A et un flanc droite 8B qui, après assemblage, forment la structure brute d'une carcasse complète.

Les deux flancs 8A et 8B ne sont pas généralement symétriques.

Selon l'invention, les deux parties 8A et 8B, sont fabriquées en aluminium ou en alliage d'aluminium par une méthode de fonderie semi-solide, de préférence par la méthode connue sous le nom de « Rheocasting ».

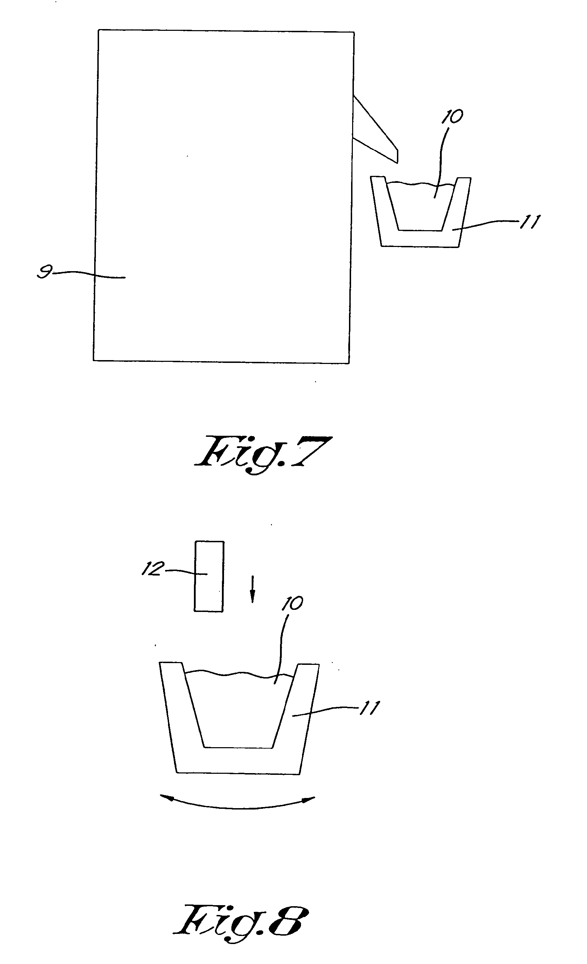

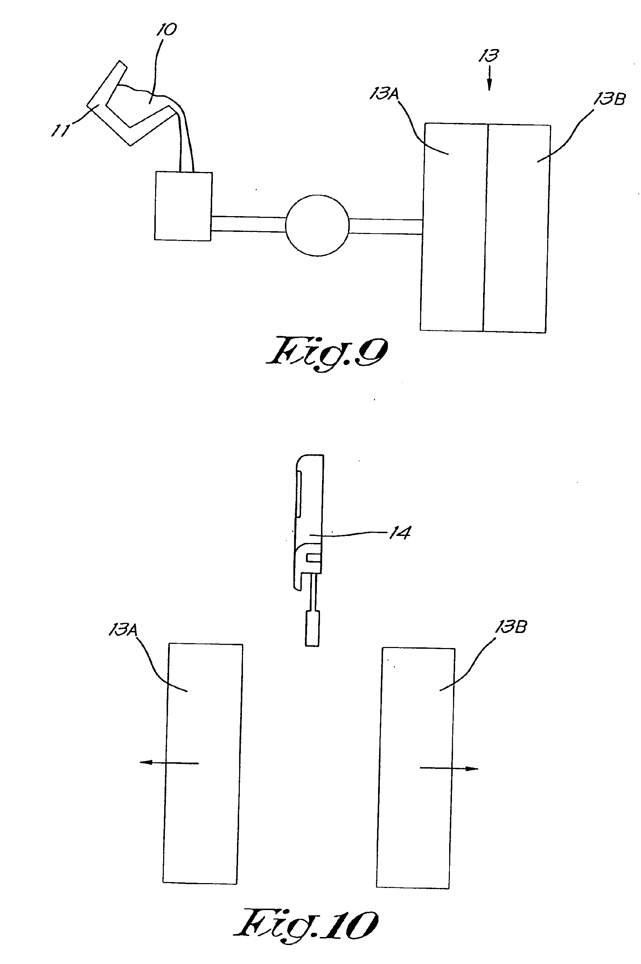

Les différentes étapes descriptives de cette méthode sont illustrées d'une manière schématique dans les figures 7 à 11.

La figure 7 montre un fourneau 9 servant à réaliser une fonte 10 d'aluminium à la température optimale d'état semi-solide.

Une quantité appropriée de la fonte 10 est récupérée dans un creuset 11 comme représenté dans la figure 7.

Un lopin 12 de matière solide équivalent à un certain pourcentage de fraction solide est ensuite ajouté comme illustré dans la figure 8 pour obtenir une fonte semi-solide qui présente les phases liquide et solide, la phase solide étant caractérisée par une forme globulaire.

Cette fonte semi-solide a la propriété d'être thixotrope, caractérisée par une viscosité élevée quand la fonte est immobile et par une viscosité qui diminue sous l'effet d'une contrainte de cisaillement ou sous l'effet d'une agitation.

Tout en ajoutant le lopin, le creuset 11 est agité fortement par rotation pour fluidiser la fonte.

Cette fonte est ensuite injectée sous pression dans un moule 13 formé par deux coquilles 13A et 13B qui définissent une cavité avec la forme négative d'une seule ou de plusieurs parties 8 à réaliser.

Les coquilles 13A et 13B du moule 13 sont ensuite écartées pour récupérer la pièce moulée 14 hors du moule.

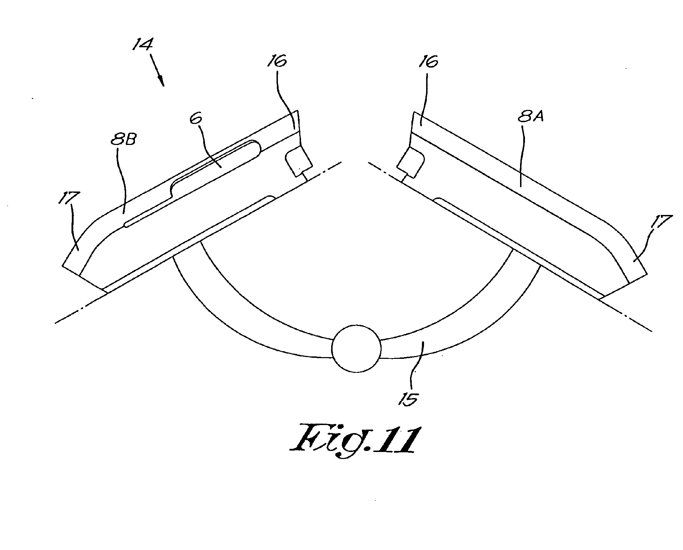

Cette pièce est représentée en vue latérale dans la figure 11 et comprend dans le cas de l'exemple de la figure 11 les deux parties 8A et 8B qui sont reliées par une rigole de coulée 15.

Les deux parties brutes sont ensuite séparées de la rigole 15 pour obtenir les deux parties 8A et 8B individuelles qui sont ensuite éventuellement usinées légèrement à certains endroits comme par exemple à la partie avant ou se fixera le canon et à la partie arrière qui est prévue pour recevoir la crosse.

Dans ce stade de fabrication l'usinage des surfaces intérieures 18 de la carcasse 2 est facilité par le fait que ces surfaces sont facilement accessibles dans l'état non-assemblé des parties 8A et 8B de la carcasse 2.

Les parties 8A et 8B sont finalement assemblées par soudage pour former une carcasse 2.

L'assemblage se fait de préférence par faisceau d'électrons sous vide, ou alternativement par soudage laser ou par soudage par friction malaxage.

Il est évident que l'invention n'est nullement limitée aux exemples décrits ci-avant mais que de nombreuses modifications peuvent être apportées à la méthode décrite ci-avant sans sortir du cadre de l'invention telle que définie dans les revendications suivantes.

## Revendications

1. Méthode de fabrication d'une carcasse monobloc en aluminium ou en alliage d'aluminium pour carabine, cette méthode comprend la réalisation de parties individuelles (8) de la carcasse qui, dans un état assemblé peuvent former une carcasse (2); suivi d'une réalisation de retouches mécaniques éventuelles; suivi de l'assemblage de ces parties (8) par soudage, que la carcasse est assemblée en partant de deux parties (8A et 8B), de préférence une demi-carcasse gauche et une demi-carcasse droite et que les parties de carcasse (8) sont dépourvues de nervures de renforcement.

2. Méthode de fabrication selon la revendication 1, **caractérisée en ce que** les parties individuelles (8) de la carcasse (2) sont fabriquées par une méthode de fonderie semi-solide.

3. Méthode de fabrication selon la revendication 2, **caractérisée en ce que** la méthode de fonderie semi-solide pour réaliser les parties de carcasse (8) est la méthode appelée « Rheocasting ».

4. Méthode de fabrication selon la revendication 1, **caractérisée en ce que** les parties individuelles (8) de la carcasse (2) sont fabriquées par forgeage à chaud.

5. Méthode de fabrication selon la revendication 1, **caractérisée en ce que** les parties individuelles (8) de la carcasse sont fabriquées par injection.

6. Méthode de fabrication selon l'une quelconque des revendications précédentes, **caractérisée en ce que** les parties de carcasse (8) sont principalement lisse à l'extérieur, c'est-à-dire à la surface prévue comme surface extérieure de la carcasse assemblée (2).

7. Méthode de fabrication selon l'une quelconque des revendications précédentes, **caractérisée en ce que** les parties de carcasse (8) sont assemblées par soudage par faisceau d'électrons.

8. Méthode de fabrication selon la revendication 7, **caractérisée en ce que** l'assemblage par faisceau d'électrons est réalisé sous vide.

9. Méthode de fabrication selon l'une quelconque des revendications 1 à 6, **caractérisée en ce que** les parties de carcasse (8) sont assemblées par soudage laser.

10. Méthode de fabrication selon l'une quelconque des revendications 1 à 6, **caractérisée en ce que** les parties de carcasse (8) sont assemblées par soudage par friction malaxage.

11. Méthode de fabrication selon l'une quelconque des revendications précédentes, **caractérisée en ce que** les parties de carcasse (8) sont assemblées par soudage uniquement.

## Patentansprüche

1. Herstellungsverfahren eines Monoblock-Verschlussgehäuses für Gewehre aus Aluminium oder einer Aluminiumlegierung dass die Herstellung umfasst der Einzelteile (8) des Verschlussgehäuses, die im montierten Zustand ein Verschlussgehäuse (2) bilden können; des Weiteren die die Durchführung eventueller mechanischer Veränderungen; nach Montage dieser Teile (8) durch Schweissen, wobei das Verschlussgehäuse aus den beiden Teilen (8A und 8B)besteht, vorzugsweise einem linken und einem rechten Halb-Verschlussgehäuse, und wobei die Einzelteile des Verschlughäuses keine Verstärkungsstreben haben.

2. Herstellungsverfahren nach Anspruch 1 sind **dadurch gekennzeichnet, dass** die Einzelteile des Verschlussgehäuses durch ein halbfestes Gussverfahren hergestellt sind.

3. Herstellungsverfahren nach Anspruch 2 sind **dadurch gekennzeichnet, dass** das zur Herstellung der Einzelteile (8) angewendete Giessverfahren, das "Rheocasting" genannte Verfahren ist.

4. Herstellungsverfahren nach Anspruch 1 sind **dadurch gekennzeichnet, dass** die Einzelteile (8) des Verschlussgehäuses (2) durch ein Warmgussverfahren hergestellt sind,

5. Herstellungsverfahren nach Anspruch 1 sind **dadurch gekennzeichnet, dass** die Einzelteile (8) des Verschlussgehäuses (8) durch Spritzgiessen hergestellt werden.

6. Herstellungsverfahren nach jeglichen oben genannten Ansprüche sind **dadurch gekennzeichnet, dass** die Teile des Verschlussgehäuses (8)prinzipiell über eine glatte Aussenfläche verfügen, dass die Oberfläche als Oberfläche des montierten Verschlussgehäuses vorzusehen sind (2).

7. Herstellungsverfahren nach jeglichen oben genannten Ansprüche sind **dadurch gekennzeichnet, dass** die Teile des Verschlussgehäuses (8)durch Elektronenstrahlschweissen zusammengefügt werden.

8. Herstellungsverfahren nach Anspruch 7 sind **dadurch gekennzeichnet, dass** das Zusammenfügen durch Elektronenstrahlschweissen im Vakuum passiert.

9. Herstellungsverfahren nach den Ansprüche 1 bis 6 sind **dadurch gekennzeichnet, dass** die Einzelteile des Verschlussgehäuses (8) durch Laserschweissen zusammengefügt sind.

10. Herstellungsverfahren nach allen Ansprüche 1 bis 6 sind **dadurch gekennzeichnet, dass** die Einzelteile des Verschlussgehäuses (8) durch Reibungsschweissen zusammengefügt sind.

11. Herstellungsverfahren nach allen oben genannten Ansprüche sind **dadurch gekennzeichnet, dass** die Einzelteile (8) des Verschlussgehäuses ausschliesslich durch Schweissen zusammengefügt sind.

## Claims

1. Production method for a monobloc rifle receiver of aluminium or aluminium alloy, **characterised in that** this method consists of the realisation of individual parts (8) of the receiver, which, in an assembled state can form a receiver (2); possibly followed by any mechanical adjustments; followed by the assembly of these parts (8) by welding, and **in that** the receiver is assembled starting from two parts (8A and 8B), preferably a left half-receiver and a right half-receiver, and **in that** the receiver parts (8) are deprived of reinforcing ribs.

2. Production method according to claim 1, **characterised in that** the individual parts (8) of the receiver (2) are manufactured by a semi-solid casting method.

3. Production method according to claim 2, **characterised in that** the semi-solid casting method to make the receiver parts (8) is the method called "rheocasting".

4. Production method according to claim 1, **characterised in that** the individual parts (8) of the receiver (2) are manufactured by hot forging.

5. Production method according to claim 1, **characterised in that** the individual parts (8) of the receiver (2) are manufactured by injection.

6. Production method according to any one of the previous claims, **characterised in that** the receiver parts (8) have a predominantly smooth appearance at the outside, i.e. on the surface which is meant to be the external surface of the assembled receiver (2).

7. Production method according to any one of the previous claims, **characterised in that** the receiver parts (8) are assembled by electron beam welding.

8. Production method according to claim 7, **characterised in that** the assembly by electron beam welding is done in a vacuum.

9. Production method according to any one of claims 1 to 6, **characterised in that** the receiver parts (8) are assembled by laser welding.

10. Production method according to any one of claims 1 to 6, **characterised in that** the receiver parts (8) are assembled by friction stir welding.

11. Production method according to any one of the previous claims, **characterised in that** the receiver parts (8) are assembled by welding only.
